# EUROPÄISCHE PATENTSCHRIFT

(11) **EP 1 857 670 B1**
(45) Veröffentlichungstag und Bekanntmachung des Hinweises auf die Patenterteilung: **20.07.2011**
(21) Anmeldenummer: 06010456.9
(22) Anmeldetag: 20.05.2006
(51) Int. Cl.: F03D 1/00, F03D 11/04, E04H 12/32, B66C 23/32

(54) **Vorrichtung zum Errichten eines aus einzelnen Turmsegmenten zusammengesetzten Turms einer Windenergieanlage**
System for erecting a wind turbine tower consisting of tower segments
Dispositif pour l'érection d'une tour d'une éolienne, la tour comprenant des segments

(43) Veröffentlichungstag der Anmeldung: 21.11.2007
(73) Patentinhaber: W2E Wind to Energy GmbH, 18230 Ostseebad Rerik (DE)
(72) Erfinder: Grever, Reinhard, 49326 Melle (DE)
(74) Vertreter: Siekmann, Gunnar

(56) Entgegenhaltungen:
- EP-A2- 1 350 953
- DE-A1- 19 647 515
- DE-A1- 19 741 988
- JP-A- 11 082 285
- JP-A- 2002 242 483
- US-B1- 6 868 646

## Beschreibung

Die Erfindung betrifft eine Vorrichtung zum Errichten einer aus einzelnen Bausegmenten zusammengesetzten Turmanlage, insbesondere einer aus einzelnen Turmsegmenten zusammengesetzten Windenergleanlage mit den Merkmalen des Oberbegriffs des Patentanspruchs 1.

Es ist bekannt, daß zur Errichtung und zum Rückbau von Turmanlagen, beispielsweise von Wndenergieanlagen, Schornsteinen, Antennentragwerken und Aussichtstürmen große Autokrane benötigt werden. Dabei steigen die Kosten für die Autokrane und die Logistik mit zunehmender Größe der zu errichtenden Turmanlage überproportional an. Hinzu kommt, daß in strukturschwächeren Regionen der Erde größere Krane nicht oder nur schwer verfügbar sind. Besonders hohe Kosten verursacht die Errichtung von Turmanlagen im Offshore-Bereich mittels Schiffskranen. Aus der EP 1577550 A2 ist ein Verfahren bekannt, mit dem eine Seilwinde an einer Windenergieanlage derart bereit gestellt wird, daß mit der Seilwinde schwere Bauteile des Gondelkopfes der Windenergieanlage ohne den Einsatz schwerer Autokrane auswechselbar sind. Dazu wird die Seilwinde mit ihrem freien Ende ihres Windenseiles am Gondelkopf angeschlagen. Dann wird die Seitwinde mittels Ihres eigenen Seiltriebes zum Gondelkopf hinaufgezogen und die Seilwinde wird mit ihrem Stator am Gondelkopf befestigt. Schließlich wird das freie Ende des Windenseiles wieder vom Gondelkopf gelöst, um es dann an auszuwechselnden schweren Bauteilen des Gondelkopfes anschlagen zu können. Mit dem in der EP 1577550 A2 beschriebenen Verfahren sowie mit der zugehörigen Vorrichtung ist es jedoch nicht möglich, unterhalb des Gondelkopfes angeordnete Bauteile, insbesondere einzelne Turmsegmente sowie den Maschinenträger des Gondelkopfes zu montieren bzw. zu errichten.

Ein gattungsgemäßer Kran zum Aufbau von Windkraftanlagen ist in der DE 19741988 A1 beschrieben. Der Kran weist ein Krangestell mit einem Ausleger auf, der zum jeweils obersten, bereits montierten Turmsegment verfahren und in einer bestimmten Höhe an diesem festgelegt wird. Das jeweils als nächstes zu montierende Element der Windkraftanlage wird mit Hilfe des Kranauslegers hochgezogen und anschließend montiert. Die Führung des Krangestells an den Turmsegmenten erfolgt vorzugsweise über Räder, Gleis- oder Raupenketten, die an dem Krangestell vorgesehen sind. Diese Räder, Gleisketten oder Laufbänder sind blockierbar und mit Hilfe einer Anpressvorrichtung an einem jeweiligen Turmsegment hydraulisch festklemmbar.

Eine ähnliche Vorrichtung ist in der US 6,868,646 B1 beschrieben. Diese Vorrichtung zum Errichten einer Windenergieanlage weist ein beweglich an den Turmsegmenten der Windenergieanlage gehaltenes Rahmengestell auf. Die Turmsegmente welsen jeweils ein Paar sich längs erstreckende Schienen auf, die an einander gegenüberliegenden Seiten des Turmsegments festgesetzt sind. In jeder Schiene sind vertikal zueinander ausgerichtete und räumlich voneinander beabstandet angeordnete Öffnungen eingeformt, die jeweils für die Aufnahme eines Stiftes verwendbar sind,

Aus der DE 196 47 515 A1 ist eine Windenergiekonvertermontageeinrichtung bekannt, die während der Errichtung des Wndenergiekonverters Bestandteil des Windenergiekonverterturms ist und mit dem Höhenzuwachs des Turmes aufsteigt und schließlich als Montagehilfe des Windenergiekonverterkopfes dient. Dazu weist die Montageeinrichtung ein kraftschlüssig am Turm festsetzbares Fußteil auf, das mit einem ersten Turmteil verschraubt wird, nach dem Aufsetzen eines weiteren Turmteils gelöst und nachfolgend abermals mit dem weiteren Turmteil verschraubt wird.

Bei der JP 11082285 wird eine Vorrichtung zum Errichten einer aus einzelnen Turmsegmenten zusammengesetzten Windenergieanlage beschrieben, wobei ein Kran als an den Turmsegmenten vertikal verfahrbares Kranportal ausgebildet ist. Dieses weist ringförmig angeordnete Klemmbacken auf, mit denen das Kranportal kraftschlüssig an dem Turmsegment festsetzbar ist.

In der EP 1350953 A2 ist ein Kran zur Errichtung von Windkraftanlagen beschrieben, der ein den Turm der Windkraftanlage einfassendes und an diesem behelfsmäßig in jeder Höhe befestigbares Rahmengestell mit einem daran angelenkten Kranausleger aufweist. Das Rahmengestell weist eine Einrichtung zum behelfsmäßigen Umklammern des Rahmengestells auf.

Der Erfindung liegt daher die Aufgabe zugrunde, eine Vorrichtung der eingangs genannten Gattung aufzuzeigen, mit denen sämtliche Bauteile einer Turmanlage besonders kostengünstig montiert und demontiert werden können.

Diese Aufgabe ist erfindungsgemäß durch eine Vorrichtung mit den Merkmalen des Patentanspruchs 1 gelöst. Vorteilhafte Weiterbildungen der Erfindung sind in den Unteransprüchen angegeben.

Der Kran wird an dem jeweils zuvor aufgesetzten Turmsegment festgesetzt. Anschließend wird mit dem Kran jeweils wenigstens ein weiteres Turmsegment auf das zuvor festgesetzte Turmsegment hinaufgekrant. In einem nächsten Schritt wird das hinaufgekrante Turmsegment mit dem darunterliegenden Turmsegment verbunden. Dann wird der Kran von dem daruntediegenden Turmsegment gelöst und der gelöste Kran wird an den Turmsegmenten hochgeführt

Mit dem Verfahren kann eine aus einzelnen Turmsegmenten zusammengesetzte Turmanlage besonders kostengünstig errichtet oder rückgebaut werden, da auf den kostenintensiven Einsatz von Autokranen, Schiffskranen und anderen Großkranen verzichtet werden kann. Die zum Verkranen der einzelnen Turmsegmenten erforderliche Kranhöhe wird über die jeweils bereits errichteten Turmsegmente bereitgestellt, so daß der dazu verwendete Kran keine langausladenden Tragelemente benötigt. Je nach Anzahl der für einen Turm vorgesehenen Turmsegmente wird die erfindungsgemäße Verfahrensschrittfalge entsprechend oft wiederholt.

Mit dem Kran können schließlich noch andere Bauteile, beispielsweise sämtliche Bauteile eines Gondelkopfes, auf die zu einem kompletten Turm aufeinandergesetzten Turmsegmente hinaufgekrant werden. Dazu bleibt der Kran an dem zu allerletzt aufgesetzten Turmsegment festgesetzt bis sämtliche zur vollständigen Errichtung der Turmanlage erforderliche Bauteile des Gondelkopfes verkrant wurden. Erst dann wird der Kran vom obersten Turmsegment gelöst, an den Turmsegmenten abwärts geführt und wieder auf dem Fundament abgesetzt. Außerdem ist das Verfahren vorteilhaft auch zum Austausch einzelner Bauteile der Turmanlage geeignet.

Wenigstens eines der Turmsegmente wird auf einem Fundament festgesetzt. Das erfolgt vorzugsweise über einen kostengünstig verfügbaren Hilfskran, mit dessen Hilfe lediglich das erste Turmsegment auf dem Fundament festgesetzt wird, Alle weiteren Turmsegmente werden durch fortwährende Wiederholung der erfindungsgemäßen Verfahrensschnttfolge aufeinandergesetzt.

Das auf dem Fundament aufgesetzte Turmsegment wird mit dem Kran eingefaßt. Dieser Verfahrensschritt bildet die Grundlage dafür, daß der Kran an hohlzylindrisch geformten Turmsegmenten sicher hochgeführt bzw. heruntergeführt werden kann, ohne dabei seine Führung verlieren zu können. Das Einfassen des auf dem Fundament aufgesetzten Turmsegmentes stellt einen wesentlichen Schritt bei der Bereitstellung des Kranes an einer zu errichtenden Windenergieanlage dar. Der Grundgedanke besteht dabei jedoch lediglich darin, daß das auf dem Fundament festgesetzte Turmsegment mit dem Kran hubbeweglich verbunden wird.

Da im Baugewerbe aus Gründen der Arbeitssicherheit in der Regel keine Reibschlußverbindungen zulässig sind, wird der Kran Jeweils formschlüssig an den Turmsegmenten festgesetzt. Damit wird verhindert, daß der Kran unter widrigen Umständen an den Turmsegmenten abrutscht und es zu Personen- oder Sachschäden kommt.

Um zu verhindern, daß der Kran durch Windböen bedingt zu pendeln beginnt und an den Turmsegmenten anschlägt, wird der Kran an den Turmsegmenten spielfrei geführt. Der Kran braucht somit während seiner Aufwärts- und Abwärtsbewegungen an den Turmsegmenten entlang von eventuell auf dem Kran arbeitenden Arbeitskräften nicht verfassen zu werden, so daß die Errichtung der Turmanlage vorteilhaft beschleunigt werden kann.

Der Kran wird an den Turmsegmenten hochgezogen, wobei wenigstens eine Zugkraft in den oberen Endbereich des jeweils zuvor aufgesetzten Turmsegmentes eingeleitet wird. In der Praxis wird man in den Endbereich des jeweils zuvor aufgesetzten Turmsegmentes vorzugsweise mehrere, über den Umfang des zuvor aufgesetzten Turmsegmentes verteilt angeordnete Zugkräfte einleiten. Ist der sich jeweils etwa über die Höhe eines Turmsegmentes erstreckende Zugweg erschöpft, wird der Kran an dem zuvor aufgesetzten Turmsegment abermals festgesetzt.

Die Zugkraft wird über wenigstens ein umgelenktes Zugmittel in den oberen Endbereich des jeweils zuvor aufgesetzten Turmsegmentes eingeleitet. Nach Art eines Flaschenzuges werden mit jeder Zugmittelumlenkung die in einem Zugmittel wirkenden Zugkräfte kleiner und die Zugmittel länger. Somit steif jede Zugmittelumlenkung eine Übersetzungsstufe dar.

Um eine sichere und spielfreie Führung des Kranes an den Turmsegmenten zu ermöglichen, wird vorgeschlagen, daß der Kran über wenigstens eine Federkraft gegen die Turmsegmente gedrückt wird. Vorzugsweise wird die Federkraft gedämpft, so daß der Kran an den Turmsegmenten besonders erschütterungsarm hochgefahren werden kann.

Die erfindungsgemäße Vorrichtung zeichnet sich dadurch aus, daß der Kran als an den Turmsegmenten vertikal verfahrbares Kranportal ausgebildet ist. Das Kranportal bildet die Basis zur Anlenkung eines Kranauslegers sowie wenigstens einer Kranwinde, die zum Verkranen der einzelnen Bausegmente, insbesondere der einzelnen Turmsegmente ausgelegt ist. Mit einem derartigen Kranportal fungieren die bereits errichteten Turmsegmente als ein Krantragwerk, über das die vom Kran aufzubringenden Gegenkräfte in das Fundament eingeleitet werden. Mit dem vertikal verfahrbaren Kranportal ist somit eine Vorrichtung zum Errichten einer Turmanlage geschaffen, mit der vorteilhaft auf den kostenträchtigen Einsatz schwerer Autokrane und anderer Großkrane verzichtet werden kann.

Nach einer ersten Weiterbildung der erfindungsgemäßen Vorrichtung weist der Kran zum Anschlagen von Zugmitteln vorgesehene Aufhängelager auf. Diese Aufhängelager dienen dazu, den Kran an den Turmsegmenten hochzuziehen bzw. herabzulassen.

Nach einer besonders vorteilhaften Weiterbildung der Erfindung sind dem Kran an den Turmsegmenten befestigbare Umlenkrollen zugeordnet. Dem Kran können jedoch zusätzlich noch direkt am Kran angeordnete Umlenkrollen zugeordnet sein, so daß die Zugmittel nach Art eines Flaschenzuges in mehreren Schlaufen geführt werden können. Über die Anzahl der Schlaufen wird ein günstiges Übersetzungsverhältnis gewählt, so daß vorteilhaft auf den Einbau teurer Getriebekomponenten verzichtet werden kann.

Um die zum Hochführen des Kranes erforderlichen Antriebskräfte aufbringen zu können, ist dem Kran ein mit den Umlenkrollen korrespondierendes Windensystem zugeordnet. Das Windensystem weist über die Umlenkrollen führbare Zugmittel auf, mit denen der Kran auf das jeweils zuvor aufgesetzte Turmsegment hinaufbewegt wird. Vorzugsweise befindet sich das Windensystem auf dem Kran, so daß sich dieser selbsttätig auf das jeweils zuvor aufgesetzte, oberste Turmsegment hinaufziehen kann. Grundsätzlich ist es jedoch ebenso denkbar, das Windensystem am Fundament der Turmanlage aufzustellen bzw. festzusetzen und das freie Ende des Zugmittels bzw. die freien Enden der Zugmittel über die am jeweils obersten Turmsegment befestigten Umlenkrollen zu führen und an den Aufhängelagern des Kranportals anzuschlagen. Vorzugsweise ist die Kranwinde Bestandteil des Windensystems, so daß die Kranwinde entweder zum Verkranen der einzelnen Bausegmente oder, in Verbindung mit dem Windensystem, zum Hochziehen bzw. Herablassen des Kranes an den Turmsegmenten eingesetzt werden kann.

Um eine aus einzelnen Bausegmenten zusammengesetzte Turmanlage komplett errichten zu können, weist der Kran einen Ausleger auf, der länger ist, als das höchste Turmsegment hoch ist. Zumindest weist der Kran jedoch einen Kranausleger auf, der länger ist, als der Schwerpunkt des höchsten Turmsegmentes hoch liegt. Damit kann der Kranausleger der erfindungsgemäßen Vorrichtung in jedem Fall eine Länge aufweisen, die weitaus geringer ist, als die Auslegerlängen schwerer Autokrane und anderer Großkrane.

Um den Kran sicher an den Turmsegmenten hoch- bzw. herunterführen zu können, weist der Kran eine wenigstens zweiteilige Rahmenkonstruktion auf, zwischen deren Rahmenteilen die Turmsegmente eingeschlossen werden. Die Mehrteiligkeit ist zwingend erforderlich, um den Kran von einer fertig errichteten Turmanlage wieder lösen zu können und den Kran erneut an einem anderen Ort zur Errichtung einer weiteren Turmanlage einsetzen zu können.

Zum Verkranen der einzelnen Turmsegmente müssen diese ein Stück weit in vertikaler Richtung bewegt werden. Dazu Ist der Kranausleger über wenigstens eine horizontale Drehachse und einen Hydraulikzylinder schwenkbeweglich an einer Rahmenkonstruktion des Kranes angelenkt. Vorzugsweise ist der Kranausleger auch über eine vertikale Drehachse an der Rahmenkonstruktion angelenkt.

Erfindungsgemäß weist die Rahmenkonstruktion formschlüssig mit den Turmsegmenten korrespondierende Festsetzmittel auf. Zur Realisierung der Formachlüssigkeit weisen die Turmsegmente außenseitig vorstehende Anschlußflansche auf, an denen der Kran über die an seiner Rahmenkonstruktion angeordneten Festsetzmittel formschlüssig festsetzbar ist. Die Festsetzmittel sind vorzugsweise gleichmäßig am Umfang der Rahmenkonstruktion verteilt angeordnete Klemmbacken, die zumindest einen die Anschlußflansche der Turmsegmente oberseitig übergreifenden Teilbereich aufweisen.

Eine besonders schonende und reibungsarme Führung des Kranes an den Turmsegmenten wird dadurch erreicht, daß die Rahmenkonstruktion wenigstens zwei mit den Turmsegmenten korrespondierende Rollenkränze aufweiset. Die Rollenkränze weisen jeweils mehrere, vorzugsweise jeweils drei bis vier ringartig zueinander angeordnete Rollen auf, die aus einem weich elastischen Material ausgebildete Laufflächen aufweisen. Beispielsweise sind die Rollen aus Hartgummi oder Polyurethan gefertigt.

Damit eine spielfreie Führung des Krans an den Turmsegmenten auch dann gewährleistet ist, wenn der Kran über die nach außen stehenden Anschlußflansche hinwegbewegt wird, weisen die Rollenkränze jeweils eine Durchmesserverstelleinrichtung auf, mit welcher der Flanschbereich durch wechselnden Eingriff der Rollenkränze sozusagen überschritten wird. Somit steht jederzeit wenigstens einer der beiden Rollenkränze mit den Turmsegmenten im Eingriff. Um ein Abkippen des Kranes bei Eingriff nur eines Rollenkranzes zu vermeiden, wird der Kran oberhalb seines Schwerpunktes am Zugmittel der Kranwinde geführt. Für eine spielfreie sowie erschütterungsarme Führung der Rollenkränze an dem sich nach oben hin verjüngenden Turm sind der Durchmesserverstelleinrichtung vorzugsweise Feder- und/oder Dämpfungselemente zugeordnet.

Eigenständiger Schutz wird außerdem für eine Turmanlage, insbesondere eine Windenergieanlage beansprucht, die mit der erfindungsgemäßen Vorrichtung ausgerüstet ist. Dabei liegt es im Rahmen der Erfindung, das Kranportal sowohl nach Art einer mobil einsetzbaren Vorrichtung, als auch nach Art einer stationär betriebenen, an einer Turmanlage verbleibenden Vorrichtung auszubilden.

Ein Ausführungsbeispiel der Erfindung, aus dem sich weitere erfinderische Merkmale ergeben, ist in der Zeichnung dargestellt. Es zeigen:
- Fig. 1:: eine erfindungsgemäße Vorrichtung nach Durchführung eines ersten bis zweiten Verfahrensschrittes zur Errichtung einer Windenergieanlage;
- Fig. 2:: die in Fig. 1 dargestellte Vorrichtung nach Durchführung eines dritten Verfahrensschrittes und während der Durchführung eines vierten Verfahrensschrittes;
- Fig. 3:: die in den Figuren 1 und 2 dargestellte Vorrichtung während der Durchführung eines fünften Verfahrensschrittes;
- Fig. 4:: die in den Figuren 1 bis 3 dargestellte Vorrichtung nach Durchführung eines sechsten bis neunten Verfahrensschrittes;
- Fig. 5:: eine erste Detailansicht der in den Figuren 1 bis 4 dargestellten Vorrichtung im Schnitt; und
- Fig. 6:: eine zweite Detailansicht der in den Figuren 1 bis 4 dargestellten Vorrichtung.

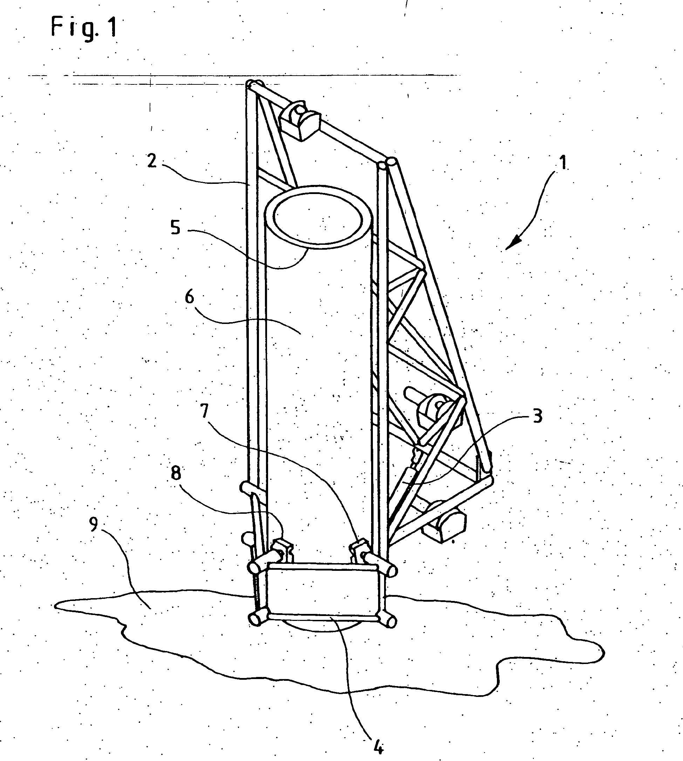

Die Fig. 1 zeigt eine erfindungsgemäße Vorrichtung mit einem als Kranportal ausgebildeten Kran 1, dessen Kranausleger 2 über einen Hydraulikzylinder 3 stellbeweglich an einer Rahmenkonstruktion 4 des Kranes 1 angelenkt ist. Die Rahmenkonstruktion 4 weist formschlüssig mit einem Anschluß-flansch 5 eines Turmsegmentes 6 korrespondierende Festsetzmittel 7, 8 auf. In einem ersten Verfahrensschritt wurde das Turmsegment 6 auf einem Fundament 9 festgesetzt und in einem zweiten Verfahrensschritt wurde das auf dem Fundament 9 festgesetzte Turmsegment 6 mit der mehrteilig ausgebildeten Rahmenkonstruktion 4 des Kranes 1 eingefaßt, so daß der Kran 1 als an dem Turmsegment 6 vertikal verfahrbares Kranportal ausgebildet ist.

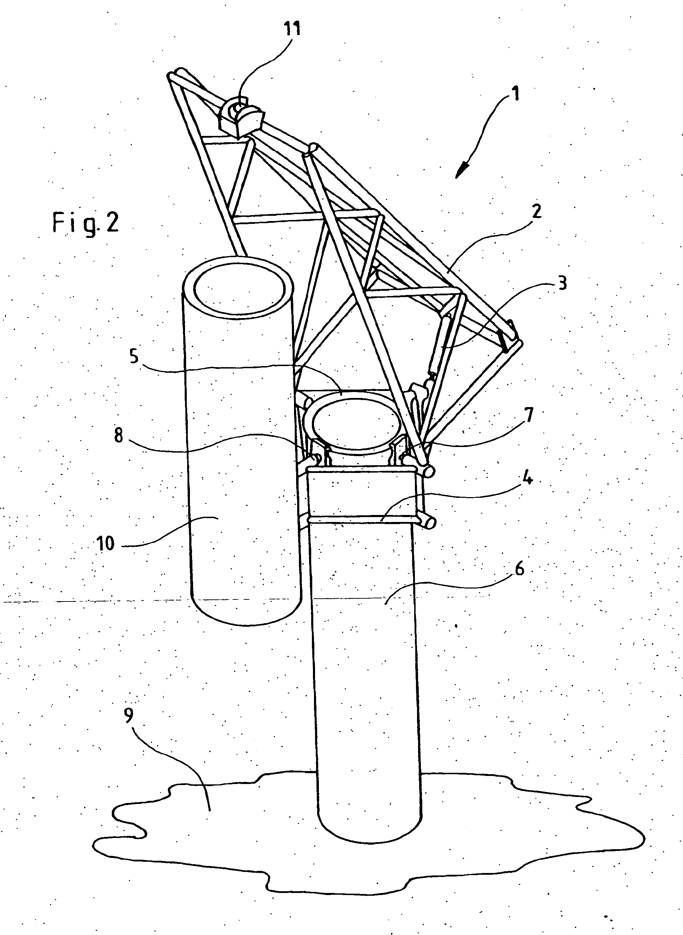

Die Fig. 2 zeigt die in Fig. 1 dargestellte Vorrichtung nach Durchführung eines dritten Verfahrensschrittes, mit dem der Kran 1 über die an seiner Rahmenkonstruktion 4 angeordneten Festsetzmittel 7, 8 am Anschlußflansch 5 des zuvor auf das Fundament 9 aufgesetzten Turmsegmentes 6 festgesetzt wurde. Außerdem zeigt diese Figur die in Fig. 1 dargestellte Vorrichtung während der Durchführung eines vierten Verfahrensschrittes, bei welchem mit dem Kran 1 ein weiteres Turmsegment 10 auf das zuvor auf das Fundament 9 aufgesetzte Turmsegment 6 hinaufgekrant wird. Dazu weist der Ausleger 2 eine Umlenkrolle 11 auf, an der das Zugmittel einer nicht dargestellten Kranwinde umgelenkt wird.

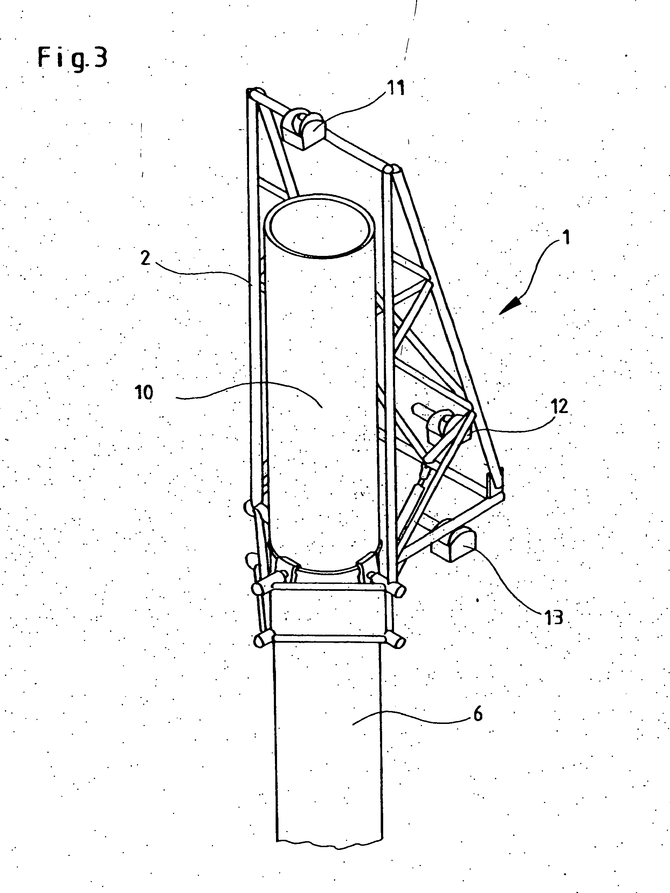

Die Fig. 3 zeigt die in den Figuren 1 und 2 dargestellte Vorrichtung während der Durchführung eines fünften Verfahrensschrittes, in welchem das hinaufgekrante Turmsegment 10 mit dem darunter liegenden Turmsegment 6 verbunden, insbesondere verschraubt wird. Außerdem zeigt diese Figur, daß der Kranausleger 2 weitere Umlenkrollen 12, 13 aufweist, an denen die Zugmittel der hier ebenfalls nicht dargestellten Kranwinde umgelenkt werden. Gleiche Bauteile sind mit gleichen Bezugszahlen versehen.

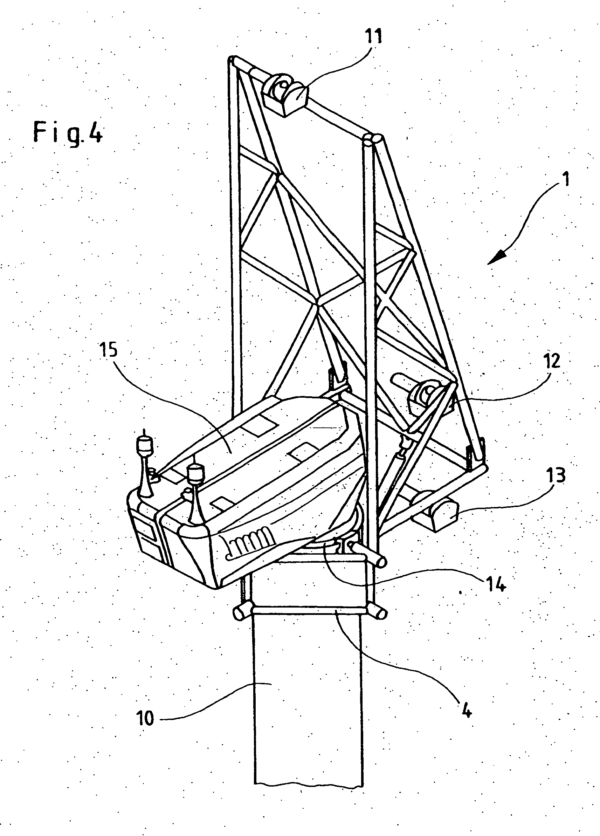

Die Fig. 4 zeigt die in den Figuren 1 bis 3 dargestellte Vorrichtung nach Durchführung eines sechsten bis neunten Verfahrensschrittes. Mit dem sechsten und siebten Verfahrensschritt wurde der Kran 1 über seine Rahmenkonstruktion 4 von dem darunterliegenden noch in Fig. 3 dargestellten Turmsegment 6 gelöst und von dort auf das Turmsegment 10 hinaufgeführt. Im achten Verfahrensschritt, der dem dritten Verfahrensschritt entspricht, wurde der Kran 1 über die an seiner Rahmenkonstruktion 4 angeordneten Festsetzmittel 7, 8 an dem Anschlußflansch 14 des zuvor aufgesetzten Turmsegmentes 10 festgesetzt. Mit dem neunten Verfahrensschritt wurden mit dem Kran 1 sämtliche Bauteile des Gondelkopfes 15 auf die zu einem kompletten Turm aufeinandergesetzten Turmsegmente hinaufgekrant. Gleiche Bauteile sind mit gleichen Bezugszahlen versehen.

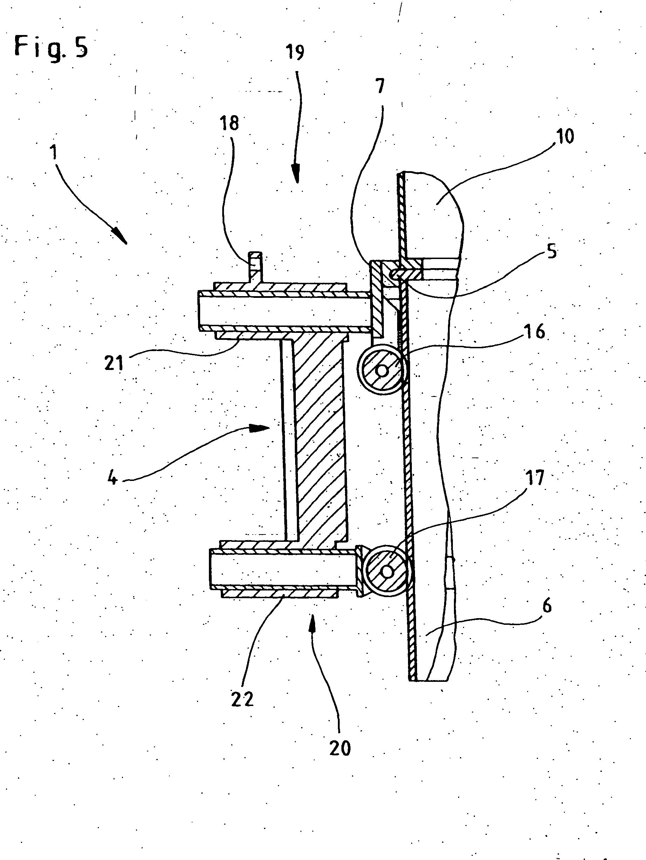

Die Fig. 5 zeigt eine erste Teilansicht der in den Figuren 1 bis 4 dargestellten Vorrichtungen im Schnitt. Diese Figur macht deutlich, daß der Kran 1 als an den Turmsegmenten 6, 10 vertikal verfahrbares Kranportal ausgebildet ist. Die Verfahrbarkeit ist über zwei an der Rahmenkonstruktion 4 angeordnete Rollenkränze 16, 17 hergestellt. Zum Anschlagen der Zugmittel der nicht dargestellten Kranwinde weist der Kran 1 an seiner Rahmenkonstruktion 4 angeordnete Aufhängelager 18 auf. Die an den Turmsegmenten 6, 10 abrollenden Rollenkränze 16, 17 weisen jeweils eine Durchmesserverstelleinrichtung 19, 20 auf, die über axiale Schiebehülsen 21, 22 verfügt. Die mit dem Anschlußflansch 5 im Eingriff stehenden Festsetzmittel 7 werden gemeinsam mit dem Rollenkranz 16 über die Durchmesserverstelleinrichtung 19 angesteuert.

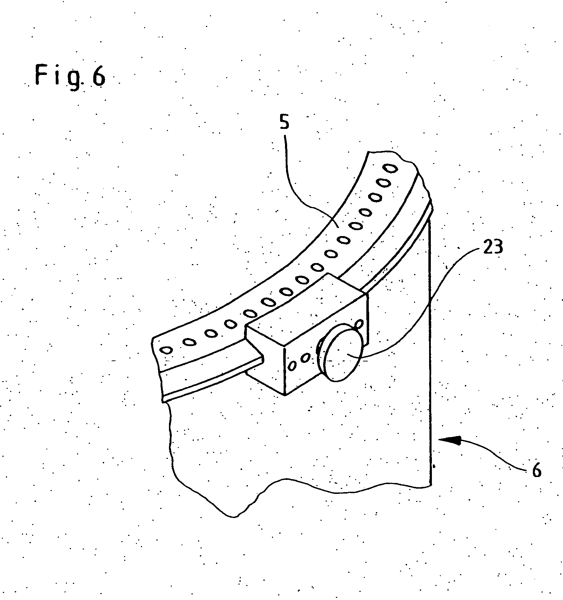

Die Fig. 6 zeigt eine zweite Detailansicht der in den Figuren 1 bis 4 dargestellten Vorrichtung. Diese Figur macht deutlich, daß dem Kran 1 an dem Anschlußflansch 5 des Turmsegmentes 6 befestigbare Umlenkrollen 23 zugeordnet sind, an denen der Kran über Zugmittel an dem Turmsegment 6 hochgezogen wird.

## Patentansprüche

1. Vorrichtung zum Errichten einer aus einzelnen Bausegmenten zusammengesetzten Turmanlage, insbesondere einer aus einzelnen Turmsegmenten (6, 10) zusammengesetzten Windenergieanlage, mit wenigstens einem Kran (1), der als an den Turmsegmenten (6, 10) vertikal verfahrbares Kranportal ausgebildet ist und eine wenigstens zweiteilige Rahmenkonstruktion (4) aufweist, wobei die Rahmenkonstruktion formschlüssig mit den Turmsegmenten (6, 10) korrespondierende Festsetzmittel (7, 8) aufweist,
**dadurch gekennzeichnet,**
**dass** der Kran (1) über die an seiner Rahmenkonstruktion (4) angeordneten Festsetzmittel (7, 8) an außenseitig vorstehende Anschlussflansche (5), die die Turmsegmente (6,10) aufweisen, formschlüssig festsetzbar ist.

2. Vorrichtung nach Anspruch 1, **dadurch gekennzeichnet, dass** der Kran (1) zum Anschlagen von Zugmitteln vorgesehene Aufhängelager (18) aufweist.

3. Vorrichtung nach einem der Ansprüche 1 und 2, **dadurch gekennzeichnet, dass** dem Kran (1) wenigstens an den Turmsegmenten (6, 10) befestigbare Umlenkrollen (23) zugeordnet sind.

4. Vorrichtung nach Anspruch 3, **dadurch gekennzeichnet, dass** dem Kran (1) ein mit den Umlenkrollen (23) korrespondierendes Windensystem zugeordnet ist.

5. Vorrichtung nach einem der Ansprüche 1 bis 4, **dadurch gekennzeichnet, dass** der Kran (1) einen Kranausleger (2) aufweist, der länger ist, als das höchste Turmsegment (6, 10) hoch ist.

6. Vorrichtung nach einem der Ansprüche 1 bis 5, **dadurch gekennzeichnet, dass** der Kranausleger (2) über wenigstens eine horizontale Drehachse und einen Hydraulikzylinder (3) schwenkbeweglich an der Rahmenkonstruktion (4) des Kranes (1) angelenkt ist.

7. Vorrichtung nach einem der Ansprüche 1 bis 6, **dadurch gekennzeichnet, dass** die Rahmenkonstruktion (4) wenigstens zwei mit den Turmsegmenten (6, 10) korrespondierende Rollenkränze (16, 17) aufweist.

8. Vorrichtung nach Anspruch 7, **dadurch gekennzeichnet, dass** die Rollenkränze (16, 17) eine Durchmesserverstelleinrichtung (19) aufweisen.

## Claims

1. A device for erecting a tower system composed of individual structural segments, in particular a wind power system composed of individual tower segments (6, 10), with at least one crane (1), which is designed as a crane portal that can be vertically traversed on the tower segments (6, 10), and exhibits an at least two-part frame construction (4), wherein the frame construction exhibits fixing means (7, 8) that positively correspond with the tower segments (6, 10),
**characterized in that**
the crane (1) can be positively fixed by means of fixing means (7, 8) arranged on its frame construction (4) to connecting flanges (5) projecting on the outside, which exhibit the tower segments (6, 10).

2. The device according to claim 1, **characterized in that** the crane (1) exhibits suspension bearings (18) provided for attaching traction mechanisms.

3. The device according to one of claims 1 and 2, **characterized in that** deflection pulleys (23) attachable at least to the tower segments (6, 10) are allocated to the crane (1).

4. The device according to claim 3, **characterized in that** a winch system corresponding with the deflection pulleys (23) is allocated to the crane (1).

5. The device according to one of claims 1 to 4, **characterized in that** the crane (1) exhibits a crane jib (2) that is longer than the highest tower segment (6, 10) is high.

6. The device according to one of claims 1 to 5, **characterized in that** the crane jib (2) is pivoted to the frame construction (4) of the crane (1) by at least one horizontal rotational axis and a hydraulic cylinder (3).

7. The device according to one of claims 1 to 6, **characterized in that** the frame construction (4) exhibits at least two roller rings (16, 17) corresponding with the tower segments (6, 10).

8. The device according to claim 7, **characterized in that** the roller rings (16, 17) exhibit a diameter adjusting device (19).

## Revendications

1. Dispositif pour l'érection d'une tour comprenant des segments, en particulier d'une éolienne composée de différents segments de tour (6, 10) réunis, comprenant au moins une grue (1) qui est formée comme un portique de grue mobile verticalement sur les segments de tour (6, 10) et une construction de cadre (4) au moins en deux parties, sachant que la construction de cadre présente des moyens de fixation (7, 8) correspondant par adhérence des formes avec les segments de tour (6, 10),
**caractérisé en ce que**
la grue (1) peut être fixée par adhérence des formes, par les moyens de fixation (7, 8) disposés sur sa construction de cadre (4), à des brides de raccordement (5) faisant saillie sur l'extérieur que présentent les segments de tour (6, 10).

2. Dispositif selon la revendication 1, **caractérisé en ce que** la grue (1) présente des attaches de suspension (18) prévues pour élinguer des moyens de traction.

3. Dispositif selon l'une des revendications 1 et 2, **caractérisé en ce que** la grue (1) a au moins des poulies de guidage (23) pouvant être fixées sur les segments de tour (6, 10).

4. Dispositif selon la revendication 3, **caractérisé en ce que** la grue (1) a un système de hissage correspondant aux poulies de guidage (23).

5. Dispositif selon l'une des revendications 1 à 4, **caractérisé en ce que** la grue (1) présente une flèche de grue (2) qui est plus longue que la hauteur du segment de tour (6, 10) le plus haut.

6. Dispositif selon l'une des revendications 1 à 5, **caractérisé en ce que** la flèche de grue (2) est articulée par au moins un axe de rotation horizontal et un vérin hydraulique (3) de façon à pouvoir pivoter sur la construction de cadre (4) de la grue (1).

7. Dispositif selon l'une des revendications 1 à 6, **caractérisé en ce que** la construction de cadre (4) présente au moins deux couronnes de galets (16, 17) correspondant aux segments de tour (6, 10).

8. Dispositif selon la revendication 7, **caractérisé en ce que** les couronnes de galets (16, 17) présentent un dispositif de réglage du diamètre (19).
